# EUROPEAN PATENT APPLICATION

(11) **EP 4 765 431 A1**
(43) Date of publication of application: **24.06.2026**
(21) Application number: 25841494.5
(22) Date of filing: 26.06.2025
(51) Int. Cl.: H01M 50/383, H01M 50/342, H01M 50/289, H01M 50/249

(54) **BATTERY PACK AND VEHICLE INCLUDING SAME**

(30) Priority: 17.07.2024 KR 20240094381
(71) Applicant: LG Energy Solution, Ltd., Seoul 07335 (KR)
(72) Inventor: CHOI, Jung-Woo, Daejeon 34122 (KR); KIM, Kwang-Mo, Daejeon 34122 (KR); LEE, Joo-Hyoung, Daejeon 34122 (KR); JUNG, Hye-Mi, Daejeon 34122 (KR)
(74) Representative: Plasseraud IP
(86) International application number: PCT/KR2025/009010
(87) International publication number: WO 2026/019097

(57) **Abstract**

The present disclosure relates to a battery pack including: a plurality of battery modules including a plurality of battery cells; a pack case having a storage space formed to store the plurality of battery modules; a cover member provided between the battery modules and the pack case, and having a through-hole formed to allow venting gas discharged from the battery cells to pass therethrough; and a spacer mounted to the cover member and configured to maintain a gap between the cover member and the pack case.

## Description

### TECHNICAL FIELD

The present disclosure relates to a battery pack and a vehicle including the same.

This application is based on and claims priority from Korean Patent Application No. 10-2024-0094381, filed on July 17, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell, i.e., unit battery cell, is approximately 2.5 V to 4.5 V. Therefore, when a higher output voltage is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be variously configured depending on the required output voltage or charge/discharge capacity.

Meanwhile, a common method for configuring a battery pack by connecting multiple battery cells in series/parallel is performed by preferentially configuring a battery module including one or more battery cells and then by adding other components to one or more battery modules to configure a battery pack or battery rack. Recently, cell-to-pack-type battery packs in which multiple battery cells are directly stored in a pack housing or the like, instead of modularizing the same, have been manufactured.

Meanwhile, since a battery cell involves a chemical reaction during charging and discharging, its performance may deteriorate when used at temperatures exceeding the appropriate level. Moreover, if thermal control is not properly maintained at the appropriate temperature, there remains a potential risk of unexpected ignition or explosion. Therefore, if a thermal event such as thermal runaway occurs inside the battery pack, the high-temperature gas and flame discharged from a battery cell included therein may propagate to adjacent battery cells, leading to chain reaction explosions of battery cells, which poses a significant safety risk.

In particular, when a thermal event such as thermal runaway occurs inside a battery pack, gas may be emitted from the battery cell included therein, and such gas may include flames or the like.

In general, when gas is emitted from a battery cell, electrode plate particles or active material particles that are heated to high temperatures may also be released to the outside from the battery cell, and these high-temperature particles may appear as sparks.

In this case, when the sparks are present along with the released gas, it may react with oxygen and lead to flame generation or even fire either inside or outside the battery pack. Furthermore, when a flame or fire occurs in a specific battery pack, the flame may spread to other adjacent battery packs or devices equipped with the battery pack, causing a bigger problem.

Therefore, there is a need for technology to prevent, when thermal runaway occurs in a battery cell, sparks or flames from spreading in all directions and suppress the occurrence or spread of flames or fires in the battery pack.

In addition, it is necessary to develop a structure capable of dispersing and discharging high-temperature gas generated from the battery cell when thermal runaway occurs in the battery cell, thereby preventing heat buildup inside the battery pack.

### DISCLOSURE

### Technical Problem

The present disclosure is designed to solve the problems of the related art, and therefore the present disclosure is directed to providing a battery pack capable of minimizing the thermal energy transferred to adjacent battery cells when thermal runaway occurs in a battery cell, thereby preventing or suppressing thermal runaway propagation between battery cells, and improving safety and reliability.

In addition, the present disclosure is also to provide a vehicle that includes such a battery pack.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery modules including a plurality of battery cells; a pack case having a storage space formed to store the plurality of battery modules; a cover member provided between the battery modules and the pack case, and having a through-hole formed to allow venting gas discharged from the battery cells to pass therethrough; and a spacer mounted to the cover member and configured to maintain a gap between the cover member and the pack case.

The cover member may be configured to cover a top of the battery module.

The pack case may have a plurality of storage spaces, and the cover member may be configured to cover at least some of the storage spaces.

A plurality of cover members may be provided so that the cover members are respectively provided in at least some of the plurality of storage spaces.

The pack case may include a cross-beam configured to partition the plurality of battery modules, and the cover member may be configured to be seated on the cross-beam.

A plurality of through-holes may be provided to be disposed at regular intervals.

The spacer may be configured to be inserted into at least some of the plurality of through-holes.

The battery module may include a module case configured to group the plurality of battery cells and having a venting hole formed on one side to discharge the venting gas to the outside.

The spacers may be provided alternately with the venting holes.

The spacer may include a first portion provided between the cover member and the pack case.

The spacer may include a second portion provided between the cover member and the battery cell.

The spacer may be configured to be larger than the through-hole.

In another aspect of the present disclosure, there is provided a vehicle including a battery pack according to the present disclosure.

### Advantageous Effects

According to one aspect of the present disclosure, safety and reliability can be ensured by preventing sparks generated in an abnormal state of a battery cell from spreading in all directions.

Furthermore, according to one aspect of the present disclosure, thermal propagation prevention performance can be effectively secured for each pack by suppressing flame development in the battery pack.

In addition, according to one aspect of the present disclosure, since high-temperature gas or flame can be quickly discharged to the outside of the battery pack through a space formed between the battery cell and the cover member, heat buildup inside the battery pack can be relieved. As a result, it is possible to effectively prevent or delay thermal runaway propagation between the battery cells.

In particular, according to one aspect of the present disclosure, high-temperature gas or flame generated from the battery cell in an abnormal state of the battery cell can be dispersed and discharged, so that heat concentration in a specific portion of the battery pack can be suppressed.

As a result, according to one aspect of the present disclosure, it is possible to prevent or delay events due to thermal runaway, such as fire or explosion, in a device equipped with the battery pack.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is a perspective view illustrating the internal configuration of a battery pack according to an embodiment of the present disclosure.
FIG. 3 is an exploded perspective view of a battery pack according to an embodiment of the present disclosure.
FIG. 4 is a partially cross-sectional view taken along line I - I' in FIG. 1, which illustrates the flow direction of venting gas or the like when a thermal event occurs in a battery pack according to an embodiment of the present disclosure.
FIG. 5 illustrates a comparative example in which a spacer included in a battery pack according to an embodiment of the present disclosure is not provided.
FIG. 6 is a drawing illustrating a cover member included in a battery pack according to an embodiment of the present disclosure.
FIG. 7 is a drawing illustrating a cover member included in a battery pack according to another embodiment of the present disclosure.
FIG. 8 is an enlarged perspective view of a main portion of a battery pack according to an embodiment of the present disclosure.
FIG. 9 is a drawing illustrating the arrangement of spacers included in a battery pack according to an embodiment of the present disclosure.
FIG. 10 is a drawing illustrating the structure of a spacer included in a battery pack according to an embodiment of the present disclosure.
FIG. 11 is a drawing illustrating the structure of a spacer included in a battery pack according to another embodiment of the present disclosure.
FIG. 12 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front, and back are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a front-back direction, the Y-axis direction may indicate a left-right direction perpendicular to the X-axis direction on the horizontal plane (X-Y plane), and the Z-axis direction may indicate an up-down direction (vertical direction) perpendicular to both the X-axis direction and the Y-axis direction.

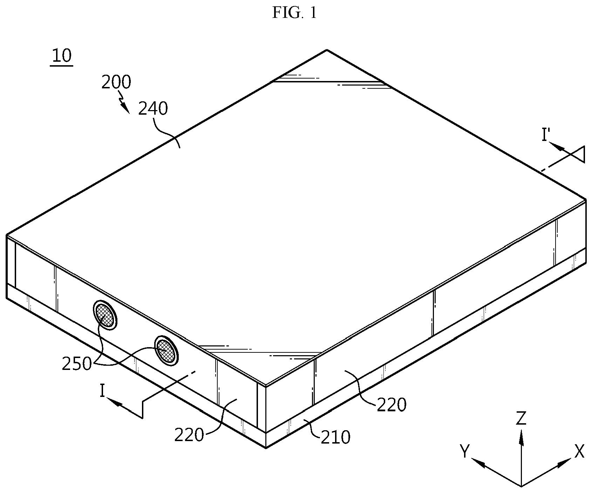

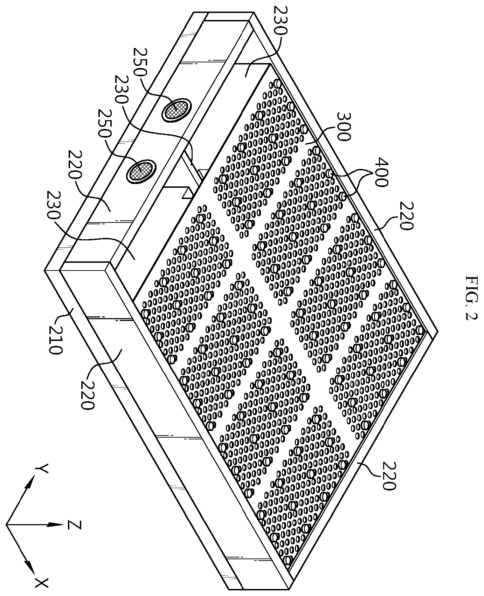

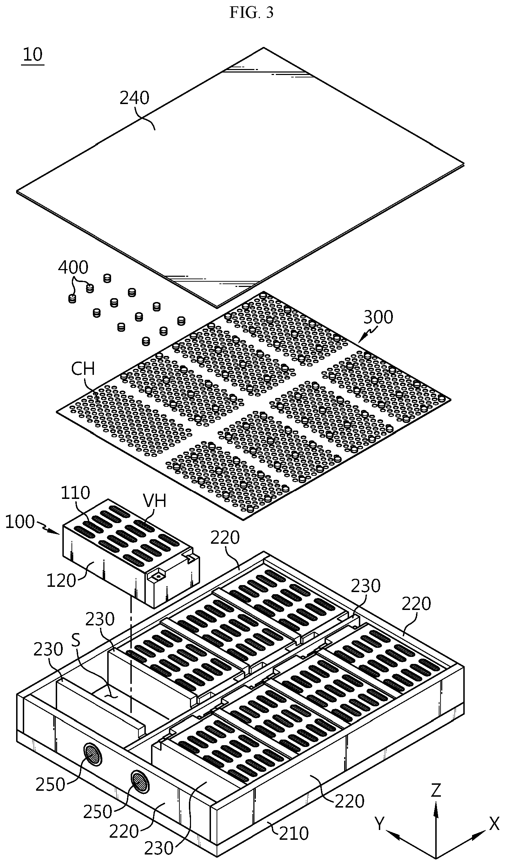

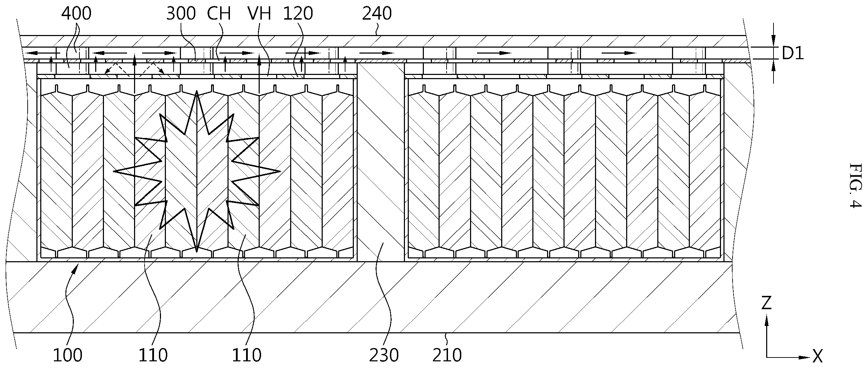

FIG. 1 is an overall perspective view of a battery pack according to an embodiment of the present disclosure, FIG. 2 is a perspective view illustrating the internal configuration of a battery pack according to an embodiment of the present disclosure, and FIG. 3 is an exploded perspective view of a battery pack according to an embodiment of the present disclosure. In addition, FIG. 4 is a partially cross-sectional view taken along line I - I' in FIG. 1, which illustrates the flow direction of venting gas or the like when a thermal event occurs in a battery pack according to an embodiment of the present disclosure.

Referring to FIGS. 1 to 4, a battery pack 10 according to an embodiment of the present disclosure may include a battery module 100, a pack case 200, a cover member 300, and a spacer 400.

The battery module 100 may include a battery cell 110. The battery cell 110 may include an electrode assembly, a cell case that stores the electrode assembly, and an electrode lead that is connected to the electrode assembly and extends to the outside of the cell case, functioning as an electrode terminal. In this case, the plurality of battery cells 110 may be electrically connected to each other.

The present disclosure is not limited to a specific type or form of the battery cell 110, and various battery cells 110 known at the time of filing the present disclosure may be applied to configure the battery pack 10 of the present disclosure. In the present embodiment, although a pouch-type secondary battery with high energy density and easy stacking will be described as shown in the drawing, it is obvious that a cylindrical or prismatic secondary battery may also be applied to the battery cell 110.

A plurality of battery cells 110 may be included in the battery module 100. The plurality of battery cells 110 may be arranged in parallel along the front-back direction (X-axis direction) while standing in the vertical direction (Z-axis direction). That is, the battery module 100 may refer to an assembly of a plurality of battery cells 110.

The pack case 200 may be configured to store the battery module 100. A storage space S may be formed in the pack case 200 to store the battery module 100. The storage space S is an empty space, and may be configured in a shape capable of storing the battery module 100 therein.

In this case, a plurality of storage spaces S may be provided. In addition, the battery module 100 may be provided in plurality. The plurality of battery modules 100 may be disposed adjacently in multiple rows along at least one direction in the storage space S of the pack case 200. For example, as shown in FIG. 3, the plurality of battery modules 100 may be arranged in four rows along the front-back direction (X-axis direction) and in two rows along the left-right direction (Y-axis direction).

The pack case 200 may be made of a material capable of securing mechanical strength, such as a metal, for example, steel or SUS, or a plastic, or may include such a material, in order to safely protect the battery module 100 stored therein.

The cover member 300 may be provided outside the battery module 100. In particular, it may be provided between the battery module 100 and the pack case 200. The cover member 300 may be configured such that venting gas discharged from the battery cell 110 may pass therethrough. As a specific example, a through-hole CH may be formed in the cover member 300. The cover member 300 may be configured, for example, in the form of a perforated plate or mesh plate. The cover member 300 may have a plurality of through-holes CH densely formed. In this case, all the through-holes CH may have the same size, or may have different sizes in portions.

The cover member 300 may be made of a material that includes a material having low thermal conductivity and excellent heat resistance and/or fire resistance. For example, the cover member 300 may be made of a flame-retardant mica material. Alternatively, the cover member 300 may be made of a metal material having rigidity and heat resistance.

According to the above-implemented configuration of the present disclosure, since the through-holes CH are formed, the venting gas generated when a thermal event occurs in the battery module 100 may be dispersed and discharged in various directions (see the solid arrows in FIG. 4). If the venting gas is discharged in one direction, heat may be concentrated to cause an explosion or fire. However, according to the above-implemented configuration of the present disclosure, this phenomenon may be suppressed. In addition, the thermal energy per unit area transferred to an adjacent battery module 100 may be reduced, so thermal propagation between the battery modules 100 may be suppressed or delayed.

In addition, according to the above-implemented configuration of the present disclosure, the flow of the venting gas generated when a thermal event occurs in the battery module 100 may be resisted by the cover member 300, thereby reducing the flow rate of the venting gas. Accordingly, since the thermal energy per unit time transmitted to the adjacent battery module 100 may be reduced, thermal propagation between the battery modules 100 may be suppressed or delayed.

Furthermore, the cover member 300 may be configured to suppress the discharge of flames or sparks, emitted together with the venting gas, to the outside of the cover member 300. In this case, it is preferable that the through-hole CH be limited to a size capable of preventing flames or sparks generated in the battery module 100 from being exposed to the outside through the through-hole CH.

Sparks or flames with a strong tendency to move straight may be discharged from the battery cell 100, and may collide with the internal structure of the pack case 200, so that heat may be concentrated in the pack case 200. However, according to the above-implemented configuration of the present disclosure, the flow direction of the sparks or flames may be bent by the cover member 300 (see the dotted arrows in FIG. 4).

Accordingly, the discharge of sparks to the outside of the pack case 200 may be suppressed, thereby preventing the sparks and oxygen from reacting to generate a flame outside the pack case 200. Therefore, according to the above aspect of the present disclosure, the safety and reliability of the battery pack 10 may be ensured.

In addition, according to an implemented configuration of the present disclosure, the sparks generated in the battery cell 100 may be blocked by the cover member 300, while the venting gas is smoothly discharged through the through-holes CH. Therefore, when an abnormal situation occurs in the battery cell 100, the venting gas may be quickly discharged to the outside of the pack case 200, thereby preventing the internal pressure of the pack case 200 from increasing, and preventing further chain ignition of other battery cells 100.

The cover member 300 and the pack case 200 may be spaced apart from each other by a predetermined distance, so that venting gas or flames may move through the separation space. In this case, the spacer 400 may be configured to maintain the distance D1 between the cover member 300 and the pack case 200. The spacer 400 may be mounted to the cover member 300. The spacer 400 may be provided on the outer surface of the cover member 300.

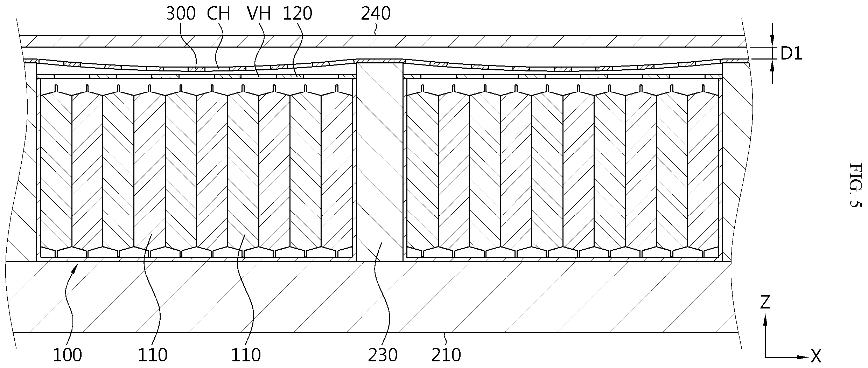

FIG. 5 illustrates a comparative example in which a spacer included in a battery pack according to an embodiment of the present disclosure is not provided.

As shown in the comparative example in FIG. 5, if the spacer 400 is not provided, when thermal runaway occurs in the battery module 100, the shape of the pack case 200 may be deformed by the pressure of the gas and/or the high heat of dust or flame discharged from the battery cell 110. For example, a portion of the upper surface of the pack case 200 may bulge upward, whereas another portion adjacent thereto may sag downward. As a result, the gap D1 between the pack case 200 and the cover member 300 may be reduced in the portion where the upper surface of the pack case 200 sags downward, thereby obstructing the movement path of the venting gas.

However, according to an embodiment of the present disclosure, since the spacer 400 is coupled to the pack case 200, it is possible to prevent the pack case 200 from being bent or deformed by the pressure and/or heat of the venting gas or the like.

Therefore, according to the above-implemented configuration of the present disclosure, the gap D1 between the pack case 200 and the cover member 300 may be maintained. As a result, the venting gas may be smoothly discharged to the outside of the battery pack 10, thereby suppressing or preventing thermal runaway between the battery modules 100. Therefore, the safety and reliability of the battery pack 10 may be guaranteed.

The spacer 400 may be configured as a rigid body. Here, the rigid body refers to a body as opposed to an elastic body, and for example, the spacer 400 may be made of a metal such as SUS, or a reinforced fiber plastic. As a result, the spacer 400 may possess high mechanical rigidity and almost no elastic deformation may occur, so the gap D1 between the pack case 200 and the cover member 300 may remain constant even when an impact is applied from the outside.

In addition, the spacer 400 may be made of a material having fire-resistant and/or heat-resistant performance. For example, the spacer 400 may be made of a material such as a flame-retardant plastic or mica. According to the above-implemented configuration of the present disclosure, the spacer 400 may be prevented from melting or disappearing due to high heat such as flame. Therefore, even in a situation where a flame occurs, the spacer 400 may ensure to maintain the gap D1 between the pack case 200 and the cover member 300. However, the material of the spacer 400 is not limited thereto.

Referring to FIG. 3 and FIG. 4, the battery module 100 according to an embodiment of the present disclosure may include a module case 120. The module case 120 may be configured to have an empty space formed therein and store at least some of the plurality of battery cells 110 in the inner space. That is, the module case 120 may be a boundary that groups the plurality of battery cells 110 into several battery modules 100 and physically confines the inner space of each battery module 100.

Although the module case 120 is provided in the present embodiment, unlike the present embodiment, the plurality of battery modules 100 may not be provided with the module case 120, so the physical boundary may not be defined between the plurality of battery cells 110.

A venting hole VH may be formed in the module case 120. The venting hole VH may be configured so that the venting gas generated from the battery cell 110 stored inside the module case 120 is discharged to the outside of the module case 120.

Specifically, the venting hole VH may enable directional venting in a specific direction. For example, as shown in FIG. 3 and FIG. 4, a venting hole VH may be formed in the upper surface of the module case 120, and directional venting of the battery module 100 in the upward direction may be performed through the venting hole VH. A plurality of venting holes VH may be provided, and may be arranged at regular intervals in the horizontal direction (X-axis and Y-axis directions).

According to the above-implemented configuration of the present disclosure, in a situation where one of the battery cells 110 undergoes thermal runaway and generates gas or the like, the gas or the like may be quickly vented in a specific direction from the module case 120.

In addition, although not shown in the drawing, the battery module 100 may include a bus-bar assembly electrically connected to a plurality of battery cells 110 stored therein.

The cover member 300 may be configured to cover the outer surface of the module case 120 where the venting holes VH is formed. For example, as disclosed in the embodiment illustrated in FIG. 3, in a case where the venting holes VH are formed in the upper surface of the module case 120, the cover member 300 may be configured to cover the top of the battery module 100. The cover member 300 may be configured to cover the upper surface of the module case 120.

Referring to FIG. 4, the cover member 300 may be disposed to be spaced apart from the battery module 100 by a predetermined distance. For example, the cover member 300 may be configured to cover the upper surface of the module case 120 from the outside while being spaced apart from the upper surface of the module case 120 by a predetermined distance.

In this case, the venting hole VH may be configured to communicate with the through-hole CH of the cover member 300. Accordingly, the venting gas generated from the battery cell 110 may be discharged to the outside of the battery module 100 through the venting hole VH and then move to the outside of the cover member 300 through the through-hole CH.

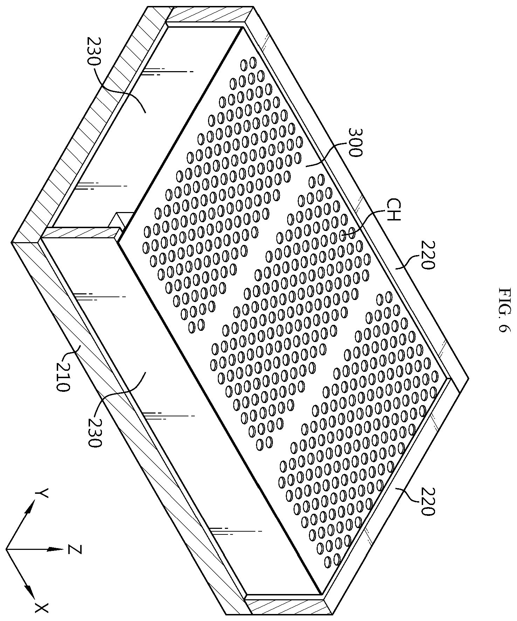

FIG. 6 is a drawing illustrating a cover member included in a battery pack according to an embodiment of the present disclosure.

The cover member 300 may be configured to cover at least some of a plurality of storage spaces S. That is, the cover member 300 may be configured to cover the top of at least some of the plurality of battery modules 100. For example, the cover member 300 may be configured to cover all the battery modules 100 disposed in one direction. As disclosed in the embodiment illustrated in FIG. 6, the cover member 300 may be configured in the form of a single plate to cover all the battery modules 100.

According to the above-implemented configuration of the present disclosure, since the cover member 300 is configured as a single plate, the cover member 300 may clearly separate the storage space S of the pack case 200 in which the battery module 100 is stored from its outer space. Therefore, it is possible to prevent venting gas or the like discharged to the outside of the cover member 300 from affecting other adjacent battery modules 100.

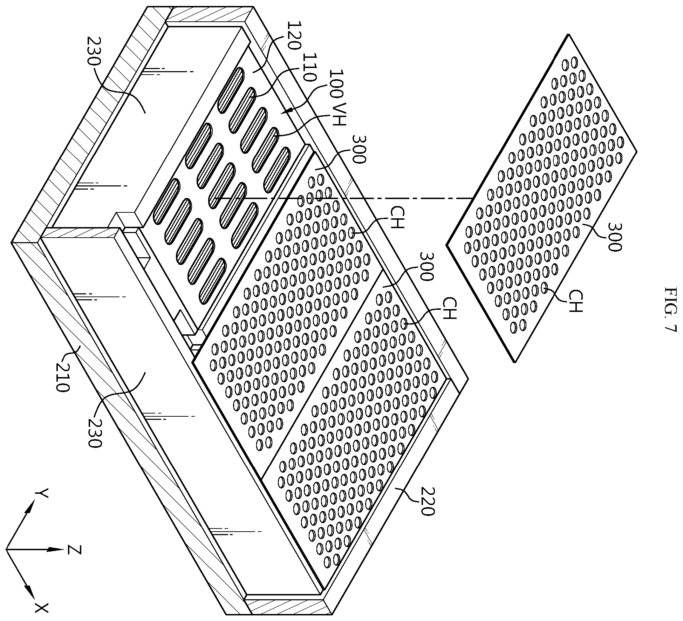

FIG. 7 is a drawing illustrating a cover member included in a battery pack according to another embodiment of the present disclosure.

As another embodiment, a plurality of cover members 300 may be provided. The cover members 300 may be respectively provided to at least some of the plurality of storage spaces S. For example, as disclosed in the embodiment illustrated in FIG. 7, the cover member 300 may be configured to cover the top of each battery module 100.

According to the above-implemented configuration of the present disclosure, since the cover members 300 are respectively provided in the storage spaces S, the cover member 300 may be selectively disposed only in the necessary area, thereby improving safety and enhancing the energy efficiency of the battery pack 10.

Referring to FIG. 2, FIG. 6, and FIG. 7, the pack case 200 according to an embodiment of the present disclosure may include a base frame 210 and a side frame 220.

The base frame 210 may form the bottom surface of the pack case 200 and may be configured in the form of a square plate. In addition, the base frame 210 may be configured such that a plurality of battery cells 110 are seated on its upper surface. Furthermore, the base frame 210 may have a flat upper surface so that a plurality of module cases 100 may be stably seated thereon.

The side frame 220 may extend upward from respective edges of the base frame 210. The side frame 220 may have a plurality of unit walls to surround the plurality of battery cells 110 or battery modules 10. More specifically, the plurality of side frames 220 may include a right wall located at the +Y-direction end of the base frame 210, a rear wall located at the +X-direction end, a left wall located at the -Y-direction end, and a front wall located at the -X-direction end, respectively, to form the side surfaces of the pack case 200.

The pack lid 240 may be configured to cover the top of the plurality of battery modules 100. The pack lid 240 may be configured to cover the upper opening of the pack case 200. The pack lid 240 may be coupled to the side frame 220. The pack lid 240 may protect components stored inside the pack case 200, such as the battery modules 100, and prevent discharges released from the battery module 100 from being discharged to the outside of the pack case 200, particularly to the upper portion.

In addition, the pack case 200 may include a venting unit 250. The venting unit 250 may be configured to discharge substances generated from the battery module 100 to the outside of the pack case 200. The venting unit 250 may be configured as a hole communicating the inner space and the outer space of the pack case 200. Alternatively, the venting unit 250 may be configured in the form of a venting device that is mountable in the hole of the pack case 200 and operates when discharges are generated inside the pack case 200.

The venting unit 250 may be provided on the side surface of the pack case 200, that is, on the side frame 220. A plurality of venting units 250 may be provided. The venting unit 250 may be located on at least some of the multiple unit walls of the side frame 220. In addition, the venting unit 250 may be formed separately on each of two or more unit walls, or two or more venting units 250 may be formed on one unit wall. For example, referring to the example illustrated in FIG. 2, a plurality of venting units 250 may be configured respectively on the front wall and the rear wall. In addition, a plurality of venting units 250 may be provided symmetrically with respect to the central axis of the side frame 220.

According to the above-implemented configuration of the present disclosure, in the event of an abnormal situation of the battery cell 110, high-temperature gas or the like may be discharged in both directions of the pack case 200, so it is easy to discharge the gas more quickly to the outside of the pack case 200.

Meanwhile, the number of installations or locations of the venting units 250 described in the embodiment in FIG. 2 or the like are only examples, and may be changed to various other values or locations.

In addition, the pack case 200 may include a cross-beam 230. The cross-beam 230 may be configured to partition the battery modules 100. The cross-beam 230 may be provided to protrude further upward than the battery module 100.

In this case, the cover member 300 may be configured to be seated on the cross-beam 230. Specifically, the cover member 300 may be seated on the cross-beam 230, and the cover member 300 and the cross-beam 230 may be coupled to each other by connecting members, such as bolts, fastened from above the cover member 300.

According to the above-implemented configuration of the present disclosure, connection and fixation between the cover member 300 and the pack case 200 may be performed with a simple structure. Accordingly, the assemblability of the battery pack 10 may be improved.

Furthermore, according to the above-implemented configuration of the present disclosure, the cover member 300 may be stably fixed between the cross-beam 230 and the pack lid 250, so that the rigidity of the battery pack 10 may be further secured.

In addition, according to the above-implemented configuration of the present disclosure, the cover member 300 and the battery module 100 may be provided to be spaced apart from each other by a predetermined distance. As a result, the cover member 300 may more reliably separate the storage space S of the battery module 100 from its outer space. Therefore, even if venting gas or flames are emitted from a battery module 100, thermal propagation to adjacent battery modules 100 may be suppressed.

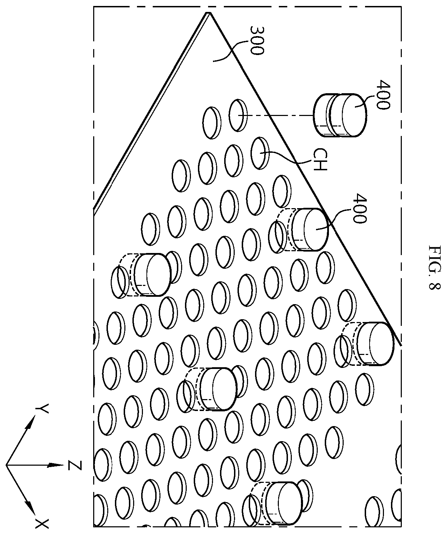

FIG. 8 is an enlarged perspective view of a main portion of a battery pack according to an embodiment of the present disclosure.

A plurality of through-holes CH may be provided. The plurality of through-holes CH may be disposed to be spaced a predetermined distance apart from each other. A plurality of spacers 400 may be provided. The spacers 400 may be disposed to be spaced apart from each other. The spacer 400 may be configured as an island type.

According to the above-implemented configuration of the present disclosure, since the spacer 400 is configured in an island shape, instead of a long beam shape, the position of the spacer 400 may be flexibly set. This may increase the degree of design freedom, thereby improving productivity.

The spacer 400 may be coupled to the through-hole CH. For example, as disclosed in the embodiment illustrated in FIG. 8, the spacer 400 may be configured to be inserted into the through-hole CH. The spacer 400 may be configured to be inserted into at least some of the plurality of through-holes CH.

According to the above-implemented configuration of the present disclosure, since the spacer 400 may be coupled to the cover member 300 with a simple structure, assemblability may be improved. In addition, according to the above-implemented configuration of the present disclosure, since other coupling structure, such as a hole or adhesive member, is not required to couple the spacer 400 to the cover member 300, productivity may be improved.

In addition, the cross-sectional area of the spacer 400 may be configured to be smaller than the area of the space between adjacent through-holes CH. Therefore, since the spacer 400 does not block the through-hole CH, it may not obstruct the discharge of venting gas or flames through the through-hole CH.

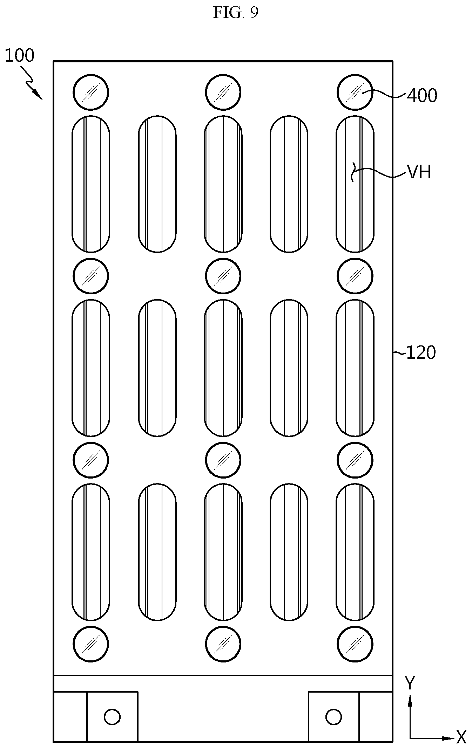

FIG. 9 is a drawing illustrating the arrangement of spacers included in a battery pack according to an embodiment of the present disclosure.

The spacer 400 may be disposed between the venting holes VH. That is, the spacers 400 may be provided alternately with the venting holes VH.

As described above, a plurality of venting holes VH may be provided at regular intervals in the horizontal direction (X-axis and Y-axis directions). As in the embodiment illustrated in FIG. 9, the spacer 400 may be provided between adjacent venting holes VH among the venting holes VH arranged in a row along the longitudinal direction of the battery cell 110 (the Y-axis direction in FIG. 9). In addition, the spacer 400 may also be provided on the edge of the module case 120, which is the outer area of the venting hole VH.

In addition, the cross-sectional area of the spacer 400 may be configured to be smaller than the area of the space between adjacent venting holes VH. As a result, the spacer 400 may not block the venting hole VH, and thus may not prevent the venting gas from being discharged through the venting hole VH.

Accordingly, as the spacers 400 are provided in a local area of the module case 120, venting gas or the like may move between the spacers 400. That is, according to the above-mentioned implemented configuration of the present disclosure, a venting path for venting gas may be secured between the spacers 400, thereby effectively preventing or delaying thermal runaway propagation between the battery modules 100.

Meanwhile, the density (fastening density) at which the spacers 400 are fastened to the through-holes CH of the cover member 300 may vary depending on the position at which the venting hole VH is formed. Here, the fastening density may refer to the number of spacers 400 per unit area of the cover member 300 or the area occupied by the spacers 400. The area or number of spacers 400 may be flexibly adjusted depending on the area or number of venting holes VH.

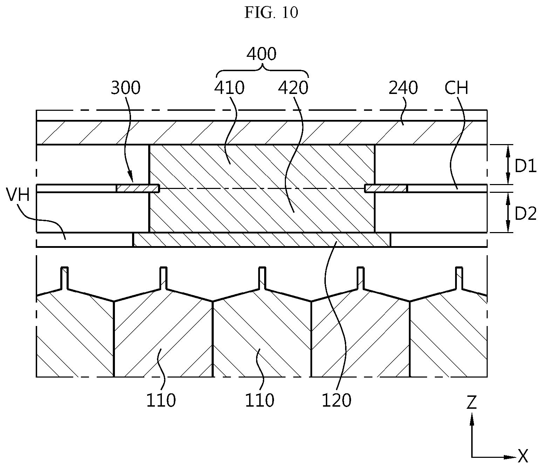

FIG. 10 is a drawing illustrating the structure of a spacer included in a battery pack according to an embodiment of the present disclosure.

The spacer 400 may be configured to define a separation distance D1 between the pack case 200 and the cover member 300. The spacer 400 may be configured to suppress downward movement of the pack case 200. To this end, the spacer 400 may be provided between the cover member 300 and the pack case 200. Specifically, referring to FIG. 10, the spacer 400 may include a first portion 410 provided between the cover member 300 and the pack case 200. That is, the first portion 410 may be provided outside the cover member 300.

The spacer 400 may be configured to be in contact with the inner surface of the pack case 200. That is, the first portion 410 may be configured to be in contact with the inner surface of the pack lid 240. The upper surface of the first portion 410 may be configured to be in contact with the inner surface of the pack lid 240, and the lower surface of the first portion 410 may be configured to be in contact with the outer surface of the cover member 300. That is, the height of the first portion 410 may be configured to be substantially the same as the distance D1 between the pack lid 240 and the cover member 300.

According to the above-implemented configuration of the present disclosure, the spacer 400 may be configured to act as a stopper when a thermal event occurs in the battery cell 110 and the pack lid 240 is about to sag downward. That is, since the spacer 400 structurally supports the pack lid 240, the pack lid 240 may be prevented from sagging due to gravity.

Therefore, according to the above-implemented configuration of the present disclosure, since the distance D1 between the pack lid 240 and the cover member 300 is maintained, a path for high-temperature gas or flames generated from the battery cell 110 in an abnormal situation of the battery module 100 to be discharged to the outside of the battery pack 10 may be secured. Accordingly, thermal runaway propagation inside the battery pack 10 may be effectively prevented or delayed, thereby ensuring the safety and reliability of the battery pack 10.

Furthermore, the spacer 400 may be configured to define the distance D2 between the battery module 100 and the cover member 300. The spacer 400 may be configured to suppress upward movement of the module case 120. To this end, the spacer 400 may be provided between the cover member 300 and the module case 120. Specifically, referring to FIG. 10, the spacer 400 may include a second portion 420 provided between the cover member 300 and the module case 120. That is, the second portion 420 may be provided on the inner surface of the cover member 300.

Specifically, the spacer 400 may be provided to be seated on the upper surface of the battery module 100. That is, the height of the second portion 420 may be configured to be approximately the same as the distance D2 between the cover member 300 and the battery module 100.

When a thermal event occurs inside the battery module 100, the pressure inside the battery module 100 may increase, so that the upper surface of the module case 120 may bulge. In this case, a constant space may not be secured between the upper surface of the module case 120 and the battery cell 110, thereby obstructing directional venting through the venting hole VH.

However, according to the above embodiment of the present disclosure, since the spacer 400 is provided between the battery module 100 and the cover member 300, the spacer 400 may pressurize and fix the battery module 100 from above. As a result, the battery module 100 may be prevented from bulging upward, so the discharges from the battery module 100 may be smoothly vented along a specific direction to the outside through the venting hole VH.

According to the above embodiment configuration of the present disclosure, since the spacer 400 structurally supports the cover member 300, the cover member 300 may be prevented from sagging by gravity. In addition, the module case 120 may be prevented from lifting more reliably. Accordingly, the distance D2 between the cover member 300 and the battery module 100 may be maintained.

In particular, the spacers 400 may be provided more densely in the area where the module case 120 is likely to bulge. For example, the spacers 400 may be provided in the area adjacent to the venting hole VH.

When venting gas or flame is discharged from the venting hole VH, there is a high possibility that the area adjacent to the venting hole VH will bulge due to the heat of the venting gas or flame. Therefore, as disclosed in the above-implemented configuration of the present disclosure, by providing the spacers 400 in the area adjacent to the venting hole VH, the module case 120 provided with the venting hole VH may be more effectively prevented from bulging.

Referring to FIG. 10, the area of the first portion 410 and the area of the second portion 420 may be configured to be substantially the same. In addition, the cross-sectional area of the spacer 400 may be configured to be approximately the same as that of the through-hole CH. In this case, the spacer 400 may be fixed to the through-hole CH by forcible fitting to the through-hole CH.

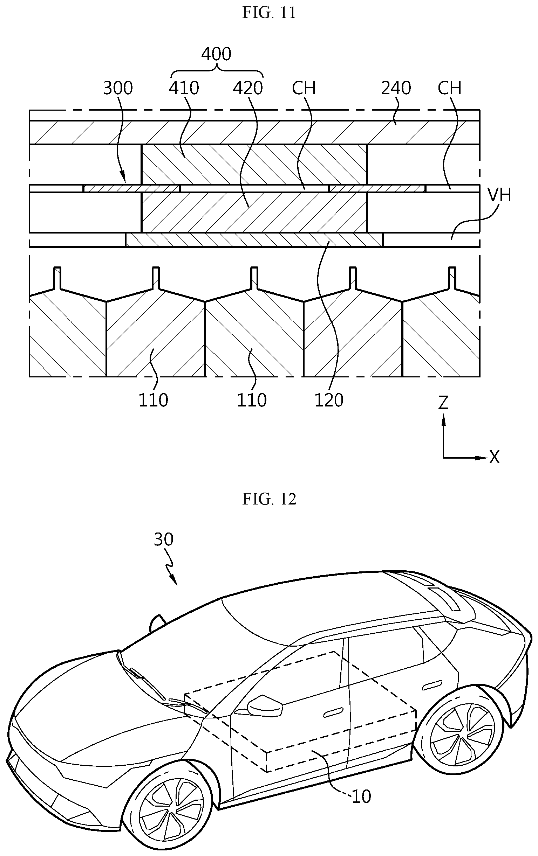

FIG. 11 is a drawing illustrating the structure of a spacer included in a battery pack according to another embodiment of the present disclosure.

As disclosed in the embodiment illustrated in FIG. 11, the spacer 400 may be configured to be larger than the through-hole CH. That is, the area projected by the spacer 400 onto the cover member 300 may be configured to be greater than the size of the through-hole CH.

For example, the first portion 410 of the spacer 400 may be configured to be larger than the cross-sectional area of the through-hole CH. In addition, the second portion 420 of the spacer 400 may be configured to be larger than the cross-sectional area of the through-hole CH.

When the spacer 400 is coupled to the through-hole CH, there is a risk that the spacer 400 will be separated from the through-hole CH due to high pressure such as venting gas or flame generated from the battery cell 110. However, according to the above-implemented configuration of the present disclosure, the spacer 400 may be prevented from being separated from the through-hole CH. Accordingly, the space between the battery module 100 and the cover member 300 may be stably secured.

In addition, according to the above-implemented configuration of the present disclosure, since the contact area between the pack lid 240 and the battery module 100 may be further secured by the spacer 400, the spacer 400 may stably fix the cover member 300 in the space between the pack lid 240 and the battery module 100. Accordingly, the cover member 300 may be prevented from being deformed due to high heat or the like.

In addition, in this case, the first portion 410 and the second portion 420 may respectively move from the outside of the through-hole CH toward the through-hole CH, based on the through-hole CH, to be fitted together. According to the above-implemented configuration of the present disclosure, the assemblability of the spacer 400 may be further secured. In addition, according to the above-implemented configuration of the present disclosure, if the size of the spacer 400 is larger regardless of the size of the through-hole CH, it may be coupled to the through-hole CH, thereby improving productivity when manufacturing the battery pack 10.

FIG. 12 is a schematic perspective view of a vehicle including a battery pack according to an embodiment of the present disclosure.

Referring to FIG. 12, the vehicle 30 according to an embodiment of the present disclosure may include one or more battery packs 10 according to an embodiment of the present disclosure. The vehicle 30 according to the present disclosure may be, for example, an electric vehicle, a hybrid vehicle, or a plug-in hybrid vehicle. The vehicle 30 includes a four-wheel vehicle and a two-wheel vehicle. The vehicle 30 runs on power supplied from the battery pack 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery modules comprising a plurality of battery cells;
a pack case having a storage space formed to store the plurality of battery modules;
a cover member provided between the battery modules and the pack case, and having a through-hole formed to allow venting gas discharged from the battery cells to pass therethrough; and
a spacer mounted to the cover member and configured to maintain a gap between the cover member and the pack case.

2. The battery pack according to claim 1,
wherein the cover member is configured to cover a top of the battery module.

3. The battery pack according to claim 1,
wherein the pack case has a plurality of storage spaces, and
wherein the cover member is configured to cover at least some of the storage spaces.

4. The battery pack according to claim 3,
wherein a plurality of cover members are provided so that the cover members are respectively provided in at least some of the plurality of storage spaces.

5. The battery pack according to claim 1,
wherein the pack case comprises a cross-beam configured to partition the plurality of battery modules, and
wherein the cover member is configured to be seated on the cross-beam.

6. The battery pack according to claim 1,
wherein a plurality of through-holes are provided to be disposed at regular intervals.

7. The battery pack according to claim 6,
wherein the spacer is configured to be inserted into at least some of the plurality of through-holes.

8. The battery pack according to claim 1,
wherein the battery module
comprises a module case configured to group the plurality of battery cells and having a venting hole formed on one side to discharge the venting gas to the outside.

9. The battery pack according to claim 8,
wherein the spacers are provided alternately with the venting holes.

10. The battery pack according to claim 1,
wherein the spacer
comprises a first portion provided between the cover member and the pack case.

11. The battery pack according to claim 1,
wherein the spacer
comprises a second portion provided between the cover member and the battery cell.

12. The battery pack according to claim 1,
wherein the spacer is configured to be larger than the through-hole.

13. A vehicle comprising a battery pack according to any one of claims 1 to 12.
